# FASCICULE DE BREVET EUROPEEN

(11) **EP 3 102 322 B1**
(45) Date de publication et mention de la délivrance du brevet: **19.04.2023**
(21) Numéro de dépôt: 15713199.6
(22) Date de dépôt: 06.02.2015
(51) Int. Cl.: B01J 19/12, B01J 19/20, B01J 8/08, B01J 8/10, B01J 19/08

(54) **PROCÉDÉ UTILISANT L'ÉNERGIE THERMIQUE SOLAIRE COUPLÉE À DES PLASMAS ET DISPOSITIF ASSOCIÉ**
VERFAHREN MIT PLASMAGEKOPPELTER SOLARTHERMISCHER ENERGIE UND ZUGEHÖRIGE VORRICHTUNG
METHOD USING PLASMA-COUPLED SOLAR THERMAL ENERGY AND RELATED DEVICE

(30) Priorité: 07.02.2014 FR 1450978
(43) Date de publication de la demande: 14.12.2016
(73) Titulaire: Ugolin, Nicolas, 75002 Paris (FR)
(72) Inventeur: Ugolin, Nicolas, 75002 Paris (FR)
(74) Mandataire: Ernest Gutmann - Yves Plasseraud S.A.S.
(86) Numéro de dépôt international: PCT/FR2015/050294
(87) Numéro de publication internationale: WO 2015/118278

(56) Documents cités:
- EP-A1- 1 970 431
- WO-A1-2009/098375
- WO-A1-2013/068459
- WO-A1-2013/160467
- WO-A2-2011/100689
- FR-A1- 2 945 033
- US-A1- 2013 126 329

## Description

L'invention concerne un procédé thermo-solaire micro-ondes. Est également concerné un dispositif lié à ce procédé, en ce qu'il permet sa mise en oeuvre. Des exemples préférentiels d'éléments structurels utiles à cela sont présentés ci-après.

Favorablement, le procédé utilisera de l'énergie thermique solaire couplée à des plasmas pour produire un carburant liquide et du dihydrogène à partir de composés carbonés.

L'épuisement des ressources pétrolières et la pollution en dioxyde de carbone (CO2) que génère la combustion de produits pétroliers (une des principales causes du réchauffement climatique), impliquent le développement de procédés de production d'énergies alternatives moins polluantes, permettant de conserver le confort de vie des pays industrialisés et de faire face à la demande en énergie toujours croissantes des pays émergents. En effet, la consommation énergétique mondiale était de 5500 Mtep en 1971, de 10300Mtep en 2002, et est évaluée à 16500Mtep pour 2030.

Il faut toutefois distinguer :
- d'une part, les besoins énergétiques destinés au développement industriel et urbain, que nous pouvons qualifier de statiques (pour lesquelles de nombreuses solutions voient le jour. Essentiellement des unités de production d'électricité solaire, nucléaire, hydraulique, géothermique, éolienne ...).
- d'autre part, les besoins énergétiques liés aux transports qui nécessitent le stockage et le transport de l'énergie par le véhicule lui-même, exception faite des véhicules électriques en ligne comme les trains et les tramways ...

Pour ce deuxième besoin lié au transport, les solutions semblent bien moins évidentes, car le ou les carburants utilisés dans les différents modes de transport doivent répondre à plusieurs contraintes.

Ils doivent être facilement transportables et stockables dans des conditions de sûreté au moins équivalentes à ce qui existe actuellement pour les produits pétroliers, avoir une balance de pollutions (fabrication - utilisation inférieure à celle des hydrocarbures) et enfin être économiquement viables par rapport aux produits pétroliers. Le problème se complique encore plus en prenant en compte les contraintes d'un carburant compatible avec les transports aériens.

Différentes voies se dessinent pour la production de carburant pour les véhicules :
- La production de biocarburant (alcool, ester),
- L'utilisation du dihydrogène comme carburant dans des piles à combustible, ou des moteurs thermiques,
- L'utilisation de batteries très performantes dans des véhicules électriques,
- L'utilisation de la biomasse ou de charbon pour la production de carburant.

La production de biocarburant, alcool ou ester d'acides gras, semble de prime abord prometteuse et est déjà mise en place dans différents pays. Toutefois, ces solutions ne sont pas parfaites, en effet les surfaces à cultiver pour offrir une autonomie énergétique sont colossales, représentant plus que l'ensemble des surfaces cultivées actuellement. De ce fait, ces cultures entrent en concurrence avec les cultures alimentaires. Les matières premières pour la production de ces biocarburants sont souvent des produits alimentaires comme le maïs, le blé, etc. Une exploitation intense de biocarburants de ce type, en plus de déséquilibrer l'économie agroalimentaire mondiale, particulièrement celle des pays émergents et en voie de développement, serait un vecteur fort de risque de famine et de désordres écologiques importants.

De plus, certains modes de production de ces biocarburants ont un rendement énergétique très faible et une balance de pollution élevée au regard du pétrole. Pour exemple, nous pouvons citer la production d'éthanol à partir de la betterave, ou la production d'acides gras ou d'ester à partir du colza.

L'utilisation du dihydrogène comme carburant semble une solution élégante pour un carburant propre à l'utilisation. Toutefois le problème de production du dihydrogène non polluant pour un coût de revient équivalent aux produits pétroliers n'est pas encore résolu. De plus, l'utilisation de ce carburant nécessite de lever de nombreux verrous pour son stockage et sa distribution au regard de sa dangerosité.

Le stockage de l'énergie électrique dans des batteries qui seront utilisées dans des véhicules électriques ou mixte électrique - thermique est l'une des solutions proposée par de nombreux constructeurs automobiles. Cette solution implique la production de batteries très performantes à faible coût ne générant pas ou peu de pollution, que ce soit pour leur fabrication ou pour leur recyclage. De plus, le problème de la production d'un carburant alternatif subsiste pour les véhicules à propulsion mixte électrique - thermique.

À notre connaissance, aucune solution viable de propulsion aéronautique basée sur les piles à combustible ou les batteries électriques n'a été proposée à ce jour.

L'utilisation de la biomasse et notamment des déchets végétaux, de cellulose, ou de produits agricoles non valorisés, représente une ressource importante de matières premières pour la fabrication de carburants liquides, de même que pour les matières plastiques non recyclables en fin de vie. De manière plus générale, toutes les ressources carbonées humides représentent un gisement considérable encore très mal exploité.

Les réserves de charbon fossile peuvent permettre de satisfaire les besoins en carburant liquide pour plusieurs décennies encore.

Toutefois, que ce soit pour la biomasse ou le charbon fossile, les procédés de gazéification utilisés pour la fabrication de carburant liquide à partir de ces matières premières sont encore trop polluants en CO2, qui peut représenter de 20 à 40% des gaz produits.

En raison de cette perte de carbone sous forme de CO2, la production de carburant à partir de la biomasse par gazéification ne présente une balance de pollution que légèrement favorable par rapport au pétrole, qui devient vite défavorable si les difficultés à contrôler les émissions de CO2 lors de la production des biomasses et de leur transport aux usines de transformation ne sont pas maîtrisées. En minimisant les pertes de carbone sous forme de CO2 lors de la production de carburant à partir de biomasse, cette balance pourrait être conduite à l'équilibre ou proche celui-ci, si l'on parvient à séquestrer le CO2 produit ou à le transformer en carburant avec un meilleur rendement. En effet, dans ces conditions, les biomasses fixeraient une proportion de carbone équivalente à celle dégagée lors de la combustion du carburant synthétisé.

Pour le charbon fossile, la situation est toute autre. Quel que soit le mode de transformation du charbon en carburant, la combustion du carburant rejettera dans l'atmosphère du CO2 provenant de carbone fossile, en plus des sous-produits indésirables (souffre, sulfure ...).

Un procédé de gazéification sans rejet de CO2 améliorera la balance de pollution des carburants obtenus par rapport aux produits pétroliers. Toutefois pour rendre la balance de pollution des carburants d'origine fossile équivalente à la balance des carburants provenant de la biomasse, des solutions de séquestration ou de transformation du CO2 devront être mises en place au niveau des sites d'utilisation des biocarburants, c'est-à-dire des véhicules eux-mêmes.

De plus en plus de méthodes permettent la transformation du CO2 en produit valorisable sont développées, toutefois très peu d'entre elles décrivent des solutions adaptées à l'industrie de gazéification de biomasse ou du charbon.

Deux grands types de procédés de transformation du CO2 peuvent être cités :
- Les méthodes catalytiques consistant à réduire le CO2 dans des composés comme le méthanol, le formaldéhyde ou l'acide formique directement valorisable.
- Les procédés électrochimiques en phase gazeuse consistant à réduire le CO2 en (monoxyde de carbone) CO et en (dihydrogène) H2 sous l'action de décharges électriques.

A noter qu'il existe des méthodes électrochimiques en solution permettant de transformer le CO2 en acide formique.

Bien que valorisables industriellement, le méthanol, le méthanal, l'acide formique, ne permettent que très difficilement la synthèse d'hydrocarbures par des procédés comme le procédé Fischer-Tropsch (FT).

Les procédés électrochimiques en phase gazeuse, peuvent produire du CO et du H2 à partir de CO2 gaz. Les méthodes d'arc glissant (GlidArc ; marque déposée ^{™}) sont particulièrement prometteuses bien qu'encore très consommatrices d'énergie (plusieurs kilovolts par m³ de gaz produit). Les procédés GlidArc (^{™}) décrits pour l'instant nécessitent souvent pour réduire le CO2, l'utilisation de gaz additifs comme l'acide sulfurique (H2S) ou le méthane (CH4). Ces méthodes ne sont pas décrites pour oxyder des particules de char ou de charbon. Les additifs favorisant les réactions sont toujours des gaz. Les géométries décrites pour les procédés GlidArc ^{™} rendent très difficilement l'optimisation des rendements des différentes réactions en fonction des flux des différents gaz. Les méthodes GlidArc ^{™} génèrent des plasmas dits hors équilibre. Aucune description ne fait état de méthodes mixtes faisant intervenir de manière concomitante ou alternative un plasma hors équilibre avec un plasma thermodynamique. De même, aucune étude n'a fait état de procédés faisant intervenir des plasmas d'origine optique, des plasmas électriques hors équilibre et des plasmas thermodynamiques. Aucune étude ne fait état de procédés d'orientation des réactions se faisant dans un plasma par des enrichissements en métaux, particules, ou catalyseur, permettant ainsi de favoriser telle ou telle réaction dans un plasma.

La réduction du CO2 en CO et H2 est un verrou technologique majeur dans l'industrie des synthèses d'hydrocarbures. En effet, une grande partie (30 à 40 %) de la matière première (Charbon, Char) est perdue sous forme de CO2, ce qui rend, en plus du coût économique, cette industrie extrêmement polluante.

Au travers de la demande de brevet N°PCT/FR 2008/001606, ont été décrits un procédé et une série de dispositifs alternatifs, adaptés à la gazéification des composés carbonés même humides biomasses humides et du charbon, permettant de produire un syngaz (CO - H2) en diminuant les coûts énergétiques prélevés sur la biomasse ou le charbon pour la synthèse. Il y est ainsi décrit un procédé thermo-solaire micro-ondes mis en oeuvre dans un réacteur tubulaire comprenant :
- un convoyeur de substrats définis comme des matières ainsi convoyées, et,
- l'application audit réacteur d'une énergie solaire et d'une énergie micro-ondes.

WO2013160467A décrit aussi un tel procédé, plus précisément un procédé qui s'apparente à un procédé de synthèse Fischer-Tropsch.

Pour, sur cette base de réacteur, surmonter les problèmes précités, il est ici proposé qu'un tel procédé :
- comprenne une étape de circulation d'un courant électrique dans le convoyeur, pour produire de la chaleur par effet Joule dans le convoyeur de substrats, et,
- comprenne en outre une fusion des substrats, lesquels comprennent les éléments nécessaires à l'obtention d'un milieu d'électrolyse pour la réduction, en aluminium, d'alumine contenue dans lesdits substrats, est réalisée sous l'action :
   -- d'une énergie thermique produite par ladite circulation de courant électrique dans le convoyeur de substrats, et
   -- de l'énergie solaire appliquée et/ou de l'énergie micro-ondes appliquée, et/ou
- que l'un des substrats contienne de l'aluminium qui est mis en fusion dans le réacteur tubulaire sous l'action :
   -- d'une énergie thermique produite par ladite circulation de courant électrique dans le convoyeur de substrats, et
   -- de l'énergie solaire appliquée et/ou l'énergie micro-ondes appliquée.

La géométrie de ce nouveau réacteur et son procédé de fonctionnement peuvent être facilement adaptables pour la production d'aluminium par la réduction d'alumine en utilisant une énergie mixte, électrique et solaire, une partie de l'énergie électrique pouvant d'ailleurs être produite à partir de l'énergie solaire thermique.

En effet, l'énergie nécessaire pour produire de l'aluminium par réduction de l'alumine Al2O3 grâce aux techniques d'électrolyse classique est de 13,5MWh/ tonne d'aluminium produit, au lieu des 5,56 MWh/ tonne attendus pour la réaction d'oxydoréduction proprement dite. L'énergie supplémentaire provient de l'énergie nécessaire pour faire fondre le mélange réactionnel en bain d'électrolyse et les pertes générées par l'effet Joule. L'utilisation d'un four solaire, adapté à partir du four solaire de pyrolyse, décrit dans la présente demande, permet d'utiliser l'énergie solaire couplée éventuellement aux micro-ondes pour atteindre l'état fondu ou semi fondu du bain, l'électrolyse étant utilisée dans une seconde étape pour réaliser la réduction. Après la réduction de l'alumine en aluminium la chaleur du métal fondu pourra être récupérée pour produire de l'électricité.

Le bain d'électrolyse et le métal réduit et fondu jouent alors le rôle d'un fluide caloriporteur dans un réacteur thermostatique tubulaire.

Le procédé de gazéification se décompose, après une éventuelle étape de préparation du substrat, en :
A) une première étape de pyrolyse/torréfaction des composés, en char et gaz de pyrolyse, dans un réacteur solaire micro-ondes, provoquée par un échauffement des composés contenus dans ledit réacteur solaire micro-ondes grâce à une énergie thermique synergique apportée conjointement d'une part, par l'échauffement des parois du réacteur grâce à la concentration par convergence ou réflexion d'un rayonnement solaire à la surface desdites parois, et d'autre part, par des micro-ondes injectées directement à l'intérieur du réacteur et des composés, et
B) une deuxième étape de transformation du char et des gaz de pyrolyse, provenant du réacteur solaire micro-ondes, principalement en CO et H2, par des réactions chimiques d'oxydoréduction se produisant dans un réacteur cyclonique, ledit réacteur cyclonique permettant la formation de vortex gazeux entraînant et oxydant les particules de char, grâce à la combustion des gaz de pyrolyse ou de gaz additionnel, à l'injection dans le réacteur cyclonique de gaz ou de mélanges de gaz échauffés, à un échauffement des gaz présents directement dans ledit réacteur sous l'action de micro-ondes injectées directement dans le réacteur cyclonique, l'échauffement des gaz pouvant aller jusqu'à l'obtention de plasma de gaz.

Le procédé thermo-solaire micro-ondes de l'invention est mis en oeuvre dans un réacteur tubulaire comprenant un convoyeur de substrats définis comme des matières ainsi convoyées, caractérisé en ce qu'il comprend une étape de circulation d'un courant électrique dans le convoyeur, pour produire de la chaleur dans ce convoyeur par effet Joule et éventuellement induire, dans les substrats, certaines au moins parmi des cuissons, des pyrolyses, des gazéifications, des fusions et des réactions chimiques comprenant des réactions d'oxydo-réductions, sous l'action du courant électrique.

Comme développé ci-après, ce procédé sera de préférence tel que :
- on réalisera une fusion des substrats, lesquels comprendront les éléments nécessaires à l'obtention d'un milieu d'électrolyse pour la réduction, en aluminium, d'alumine contenue dans ces substrats, sous l'action d'au moins une énergie parmi l'énergie solaire, l'énergie micro-ondes et l'énergie thermique produite par la circulation de courant électrique dans le convoyeur de substrats
- et/ou de l'aluminium sera fusionné dans le réacteur, sous l'action d'au moins une énergie parmi l'énergie solaire, l'énergie micro-ondes et l'énergie thermique produite par la circulation de courant électrique dans le convoyeur.

Quant au dispositif thermo-solaire micro-ondes en lui-même, il comprendra :
- un réacteur tubulaire comprenant un convoyeur de substrats définis comme des matières ainsi convoyées,
- et des moyens pour faire circuler un courant électrique dans le convoyeur, afin d'y produire de la chaleur par effet Joule et éventuellement d'induire, dans les substrats, certaines au moins parmi des cuissons, des pyrolyses, des gazéifications, des fusions et des réactions chimiques comprenant des réactions d'oxydo-réductions, sous l'action du courant électrique.

Par ailleurs, conformément à l'invention, ce dispositif présentera avantageusement tout ou partie des caractéristiques suivantes :
- le convoyeur comprendra une vis sans fin hélicoïdale comportant des éléments emboîtés entre eux par des queues d'aronde ou des clefs, lesdits éléments emboîtés étant disposés le long d'un axe du dispositif, et des éléments de suspension permettant le soutien et la rotation de la vis, tels que patins et ressorts.
- et/ou le convoyeur comprendra un système de palets successifs reliés entre eux par un câble ou une chaîne, lesdits palets étant ajustés au diamètre interne du réacteur tubulaire de manière que les substrats soient emprisonnés entre deux palets successifs et soient poussés au travers du réacteur pour le traverser,
- et/ou une entrée et éventuellement une sortie des substrats du réacteur sera assurée par un système comprenant au moins deux cylindres emboîtés entre eux et tournant en sens inverse, pour transférer les substrats de l'amont du système vers l'aval du système, sans mélange d'atmosphères entre l'amont et l'aval,
- et/ou une entrée et éventuellement une sortie des substrats du réacteur sera assurée par un système comprenant deux disques superposés, respectivement un disque supérieur et un disque inférieur, possédant chacun une ouverture, lesdites ouvertures étant disposées à des positions différentes sur les disques de manière à passer alternativement devant une chambre de transit afin d'isoler alternativement ladite chambre d'un espace en amont du disque supérieur et d'un espace en aval du disque inférieur, pour que les substrats puissent traverser le tube de transit sans mélange d'atmosphères entre l'amont et l'aval,
- et/ou le convoyeur de substrats sera repliable dans un container,
- et/ou le convoyeur sera disposé sur un chariot comportant des roues éventuellement orientables comportant éventuellement des vérins permettant une planéité du chariot et éventuellement motorisées pour un traquage solaire par rotation du chariot,
- et/ou, pour une réaction d'oxydo-réduction comprenant la réduction d'alumine en aluminium, le réacteur, qui est à paroi tubulaire, comprendra une électrode périphérique située au niveau de ladite paroi tubulaire du réacteur, préférentiellement une électrode cylindrique, mise à un potentiel négatif, formant une cathode, ladite électrode périphérique étant de préférence recouverte de carbone ou en contact avec des particules de carbone éventuellement injectées dans le réacteur, une deuxième électrode positive centrale formant une anode étant disposée au centre du réacteur, préférentiellement au niveau du convoyeur, de telle sorte que ledit convoyeur comporte alors des inserts de carbone formant une électrode d'usure,
- et/ou, pour une réaction d'oxydo-réduction comprenant la réduction d'alumine en aluminium, le réacteur tubulaire comprendra une partie supérieure et une partie inférieure, la partie supérieure du réacteur comprenant une électrode supérieure anode, et la partie inférieure du réacteur comprenant une électrode inférieure, les électrodes étant séparées par des éléments électriquement isolants,
- et/ou les électrodes seront recouvertes de carbone pour former des électrodes d'usure,
- et/ou certaines au moins de ces électrodes seront dans l'un au moins des matériaux suivants : tantale, alliage de tantale, platine ou alliage de platine, alliage de fer contenant du platine ou du tantale, acier contenant du platine ou du tantale.

La mise en oeuvre du procédé pourra faire intervenir un réacteur solaire micro-ondes de pyrolyse/ torréfaction et un réacteur cyclonique où, de préférence :
- le réacteur solaire micro-ondes de pyrolyse/torréfaction comporte entre autres :
   - un tuyau, par exemple en matériau réfractaire,
   - des moyens pour faire progresser les composés à l'intérieur du tuyau du réacteur solaire micro-ondes de pyrolyse/torréfaction,
   - des moyens pour concentrer et faire converger un rayonnement solaire à la surface du tuyau du réacteur,
   - des moyens pour isoler le tuyau du réacteur du milieu extérieur,
   - des moyens pour améliorer l'inertie thermique du tuyau du réacteur,
   - des moyens pour produire des micro-ondes,
   - des moyens pour guider les micro-ondes,
- le réacteur cyclonique comporte entre autres :
   - au moins deux unités cycloniques superposées ou emboîtées communiquant entre elles,
   - des dispositifs permettant des combustions qui induisent des vortex gazeux dans les unités,
   - des dispositifs d'injection latéraux ou tangentiels de gaz dans les unités, induisant des vortex gazeux,
   - des moyens pour produire et guider des micro-ondes.
   - des moyens pour produire et guider des rayonnements infrarouges.

La mise en oeuvre du procédé fera intervenir également et de préférence, entre autres :
- un réacteur de chauffage de mise sous pression et d'accélération des gaz d'oxydation comportant :
- un tuyau, par exemple en matériau réfractaire,
   - des moyens pour concentrer et faire converger un rayonnement solaire à la surface du tuyau du réacteur,

   - des moyens pour isoler le tuyau du milieu extérieur,
   - des moyens pour améliorer l'inertie thermique du tuyau du réacteur,
      - des moyens pour faire progresser les gaz et éventuellement les particules le long du tuyau du réacteur, en les compressant, en les chauffant et en les accélérant tels que sans être exhaustif, des rotors à aubes, des compresseurs centrifuges, des turbines, au moins une chambre annulaire,
      au moins une source de micro-ondes éventuellement complétée par une source d'infrarouges.
   - des moyens générateurs de courants électriques induits ou non, d'optique, de micro-ondes, pour produire des plasmas gazeux et/ou des plasmons mixtes gaz/particules.
   - au moins un magnétron et au moins un guide d'ondes pour produire des micro-ondes entre 1 GigaHertz et 300 GigaHertz et guider lesdites micro-ondes.

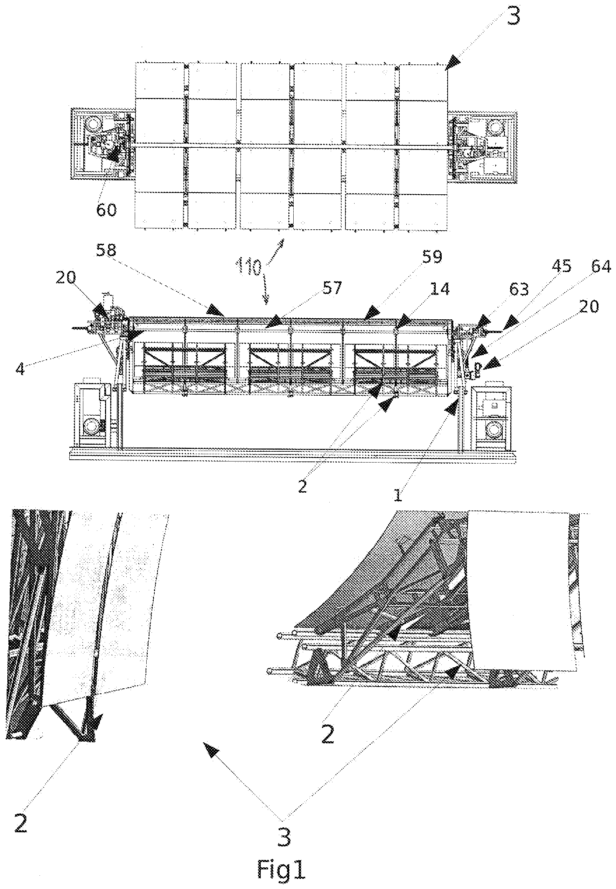

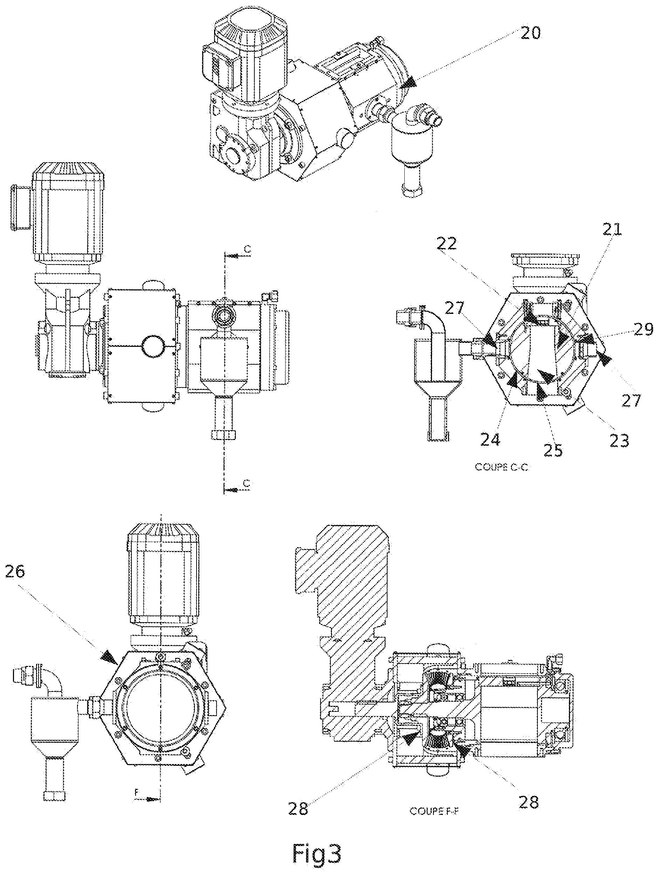

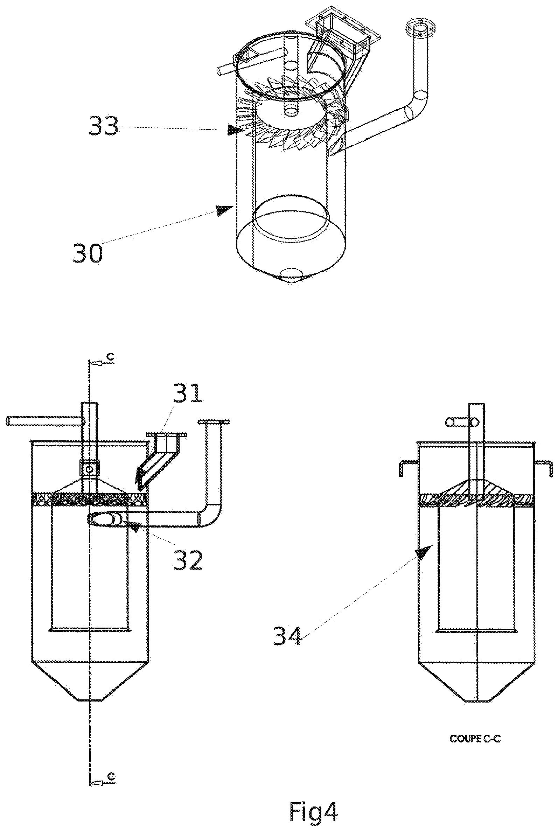

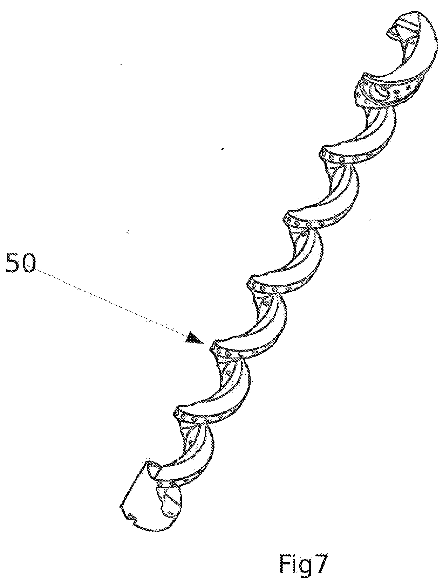

La description qui suit est faite en relation avec les figures 1 à 14 jointes qui illustrent différents détails d'exemples non limitatifs de réalisation privilégiés, afin d'exposer de façon détaillée les caractéristiques essentielles de la solution ici présentée.

Ainsi, sont décrits ci-après différents dispositifs d'amélioration pour la mise en oeuvre des procédés ci-avant présentés:
Dans un mode de réalisation particulier, la partie solaire/micro-ondes (F_smo) pourra se replier dans un conteneur tel que des systèmes de levage actionnés par des moteurs (F1.1) permettent de porter le réacteur solaire/micro-ondes en hauteur ou de le descendre et des systèmes articulés et des vérins permettent de déplier et de replier les miroirs Fig1.3 du F_smo (voir Fig1.2).

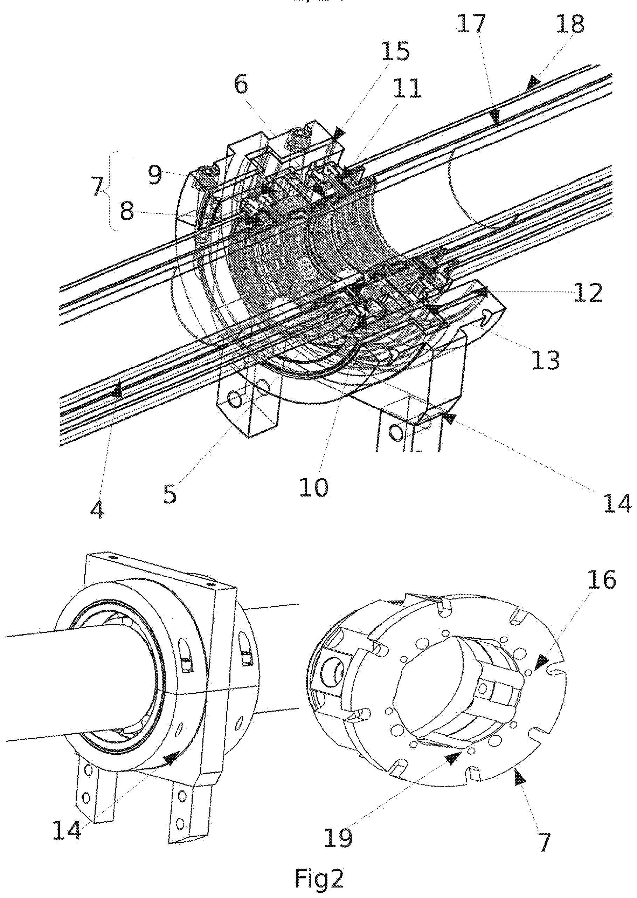

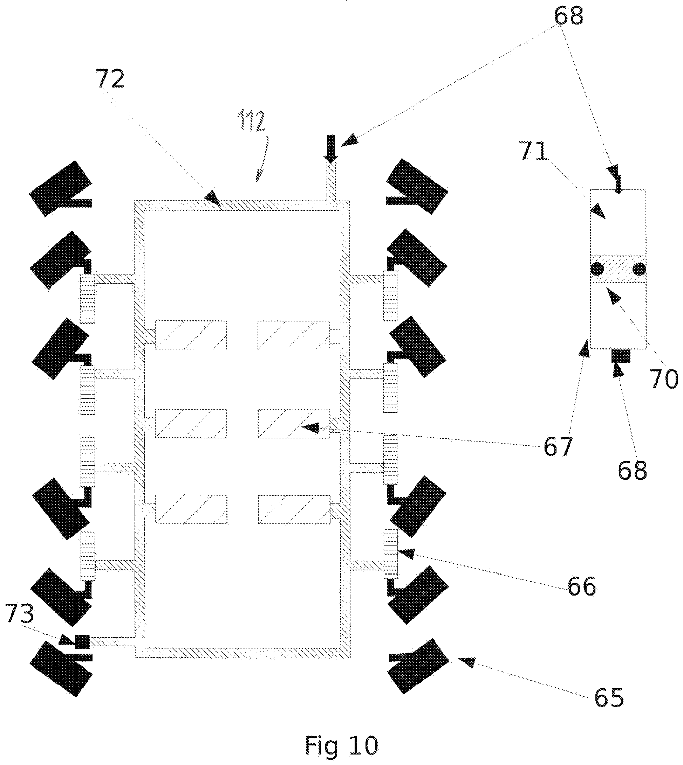

Le réacteur est posé sur un support tel que un chariot Fig10.112 comportant des roues éventuellement orientables Fig10.65 permettant de suivre la trajectoire du soleil en combinant deux rotations dans deux plans perpendiculaires horizontal et vertical. Ainsi la trajectoire du soleil étant décomposée en coordonnées polaires, la rotation du chariot permet de suivre la trajectoire horizontale du soleil, alors que l'inclinaison des concentrateurs permet de suivre la course verticale du soleil. Les roues disposeront d'un système de suspensions préférentiellement par des vérins Fig10.66 et plus particulièrement par des vérins hydrauliques couplés à des accumulateurs hydrauliques Fig10.67 permettant de garantir la planéité du chariot.
1) Dans un mode de réalisation, l'unité fonctionnelle permettant la torréfaction et la pyrolyse du substrat est le réacteur four solaire/micro-ondes (F_smo) comprend un ou plusieurs tuyaux Fig1.4 formant le réacteur proprement dit Fig1.110. Le tuyau par exemple en carbure de silicium, ou en carbure de silicium comportant des nanoparticules de diamant, augmentant leur conductivité thermique. Dans d'autres modes de réalisation, le tuyau 4 comportera une ou plusieurs couches de diamant. Le ou les tuyaux du réacteur seront de diamètre compris entre 1 centimètre et 5 mètres et d'une longueur comprise entre 10 centimètres et 20 mètres. Dans certains modes de réalisation, les tuyaux formant le réacteur seront reliés entre eux par leur extrémité grâce à des embouts emboîtés ou vissés (Fig2.5) qui permettent de faire glisser les tuyaux les uns par rapport aux autres lors de la dilatation thermique des tuyaux. Les embouts seront par exemple en alliage présentant un coefficient de dilatation voisin de celui des tuyaux, par exemple pour des tuyaux en carbure de silicium, les embouts pourront être en invar avec un coefficient voisin de celui du silicium. L'étanchéité de la jonction des tuyaux sera par exemple complétée par une structure ondulée (Fig2.6) reliant les embouts de deux tuyaux consécutifs et présentant une surface de contact d'étanchéité avec chacun des embouts des deux dits tuyaux , les surfaces de contact pouvant avoir le profil conique.

La structure ondulée sera par exemple incluse dans une bride Fig2.7-8-9 comportant des éléments de suspension du tuyau Fig2.4.3. Les éléments de suspension pouvant comprendre au moins un ressort Fig2.10 et éventuellement un piston Fig2.11. Dans certains modes de réalisation, la bride sera incluse dans une coquille métallique Fig2.12 comportant des joints Fig2.13 en caoutchouc ou en silicone vulcanisés ou tout autre polymère permettant d'isoler thermiquement la bride de la coquille et d'améliorer l'amortissement du mouvement relatif entre le réacteur et la coquille d'une part et la bride d'autre part. La coquille sera incluse dans un palier Fig2.14 par exemple en aluminium permettant la rotation du palier autour de la coquille et du réacteur, la coquille restant fixe. Le glissement de la bride sur la coquille sera assuré par exemple grâce à un roulement ou à un patin en bronze (Fig2.15). Les brides comporteront des conduits Fig2.16 qui permettront le passage d'un gaz entre les tubes de verre Fig2.16-17 ou permettront Fig2.19 de réaliser un vide entre le tube de verre intérieur et le tuyau du réacteur. Les paliers (intermédiaires et externes) supportent un berceau comprenant l'ensemble des miroirs du four F_smo et permettent la rotation des miroirs autour du réacteur, le réacteur restant fixe.

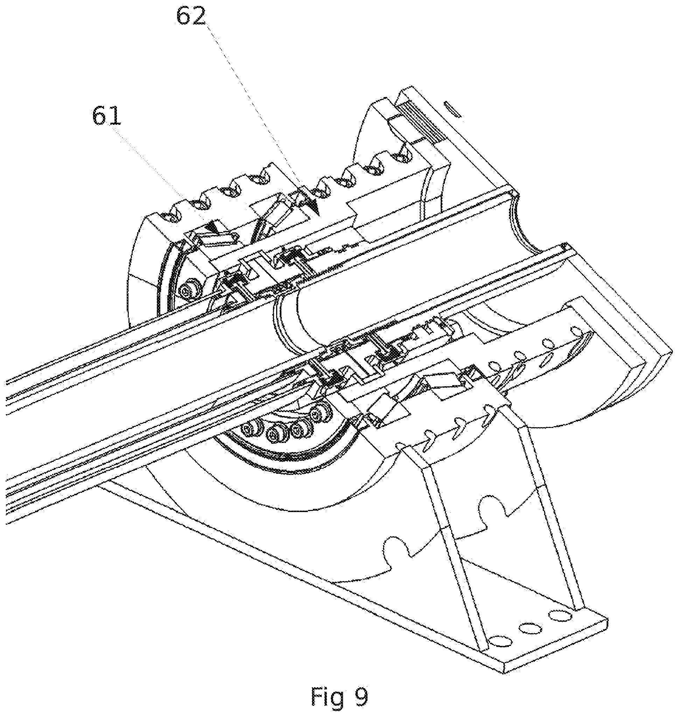

Dans un mode de réalisation particulier, la rotation des miroirs permettant le suivi de la course du soleil comprendra d'une part, un système d'engrenage incluant une crémaillère circulaire couplée à au moins un pignon à chaque extrémité du réacteur, et d'autre part des paliers de rotation soit externes Fig9 à chaque extrémité du réacteur soit intermédiaires, tel que la rotation du système de miroirs puisse se faire autour du réacteur, le réacteur restant fixe.

2) A l'entrée et à la sortie du réacteur du F_smo 110 seront disposés des systèmes permettant le passage du substrat, mais pas celui des gaz. Les gaz entreront ou sortiront du réacteur par un ou plusieurs puits destinés à cet effet. Ainsi, le réacteur sera isolé de l'atmosphère par un procédé de chargement et de déchargement des substrats.

2-1) A l'entrée et respectivement à la sortie du tuyau du réacteur seront par exemple disposés un dispositif 20 , comprenant deux cylindres emboîtés tournant en sens inverse, le cylindre le plus intérieur sera plein, et muni d'une cavité 21 percée en son fond par une série de pores 22 à l'opposé de l'ouverture de la cavité 23. Le cylindre extérieur 24, incluant le cylindre intérieur, sera muni d'une ouverture 25 de même taille que l'ouverture de la cavité du cylindre intérieur 23. Les deux cylindres seront inclus dans une chambre cylindrique 26, munie de deux ouvertures au-dessus et en-dessous de même dimension que les ouvertures des deux cylindres précédents, et de deux séries de pores opposées et disposées latéralement en position équatoriale 27. Chaque série de pores de la chambre cylindrique sera disposée sur un bosselage extérieur permettant d'éviter l'occlusion des pores lors du croisement avec les pores disposés sur le cylindre intérieur durant la rotation des différents cylindres. Les cylindres intérieur et extérieur seront munis d'un système à engrenages par exemple comprenant deux plateaux à engrenages 28 permettant de les faire tourner en sens inverse, grâce par exemple au moins un pignon disposé entre les deux plateaux.

En position :
a) les ouvertures des cylindres sont alignées vers le haut avec l'ouverture de la chambre cylindrique, et permet le remplissage de la cavité par le substrat.
b) en tournant de π/2 en sens inverse la cavité de cylindre intérieur est occultée par le cylindre extérieur alors que les pores du fond de la cavité sont positionnés en face de l'ouverture du cylindre extérieur en vis-à-vis du premier bosselage de la chambre cylindrique. Le premier bosselage est relié à une pompe à vide vidant l'atmosphère de la cavité (atmosphère extérieure).
c) en continuant les rotations en sens inverse de π/2, les deux ouvertures des cylindres intérieur et extérieur s'alignent sur l'ouverture basse de la chambre cylindrique, permettant au contenu de la cavité d'être déversé à l'intérieur du réacteur sans contamination de l'air extérieur, les pores du fond de la cavité étant occultés par le cylindre extérieur.
d) en continuant la rotation de π/2 les pores du fond de la cavité s'alignent avec l'ouverture du cylindre extérieur en face du second bosselage lui-même relié à un second vide permettant de pomper l'atmosphère provenant du réacteur vers l'intérieur du réacteur. Puis un autre cycle recommence. Les vides sont réalisés par des pompes ou des Venturi pompant les atmosphères respectivement vers l'extérieur et vers l'intérieur du réacteur.

L'étanchéité des cylindres les uns par rapport aux autres sera par exemple assurée par des joints métalliques en S 29. La cavité de la chambre intérieure sera reliée au système de soufflerie permettant d'éjecter les substrats est en position basse.

Dans un mode de réalisation particulier, la cavité haute de la chambre cylindrique est reliée à la sortie basse d'un cyclone de chargement.

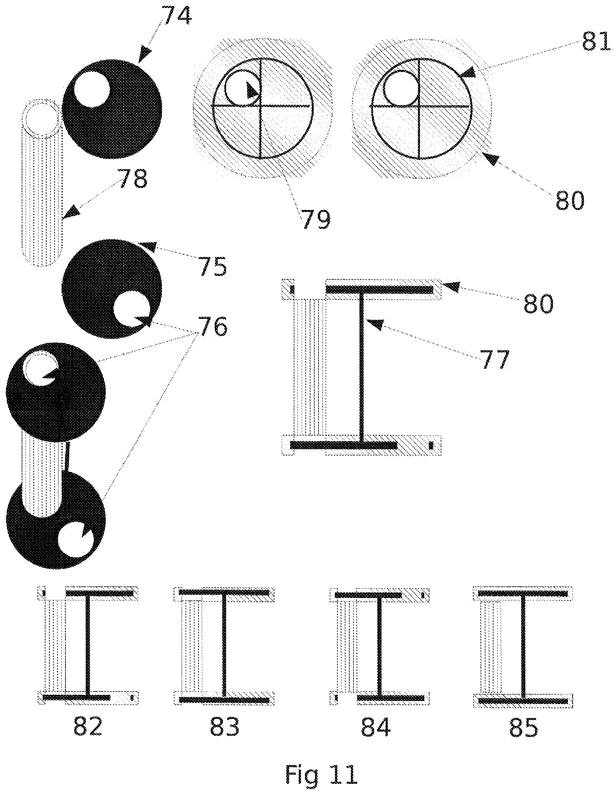

2.1.1 Dans un mode de réalisation particulier, le chargeur et/ou déchargeur comprendra deux disques superposés Fig11.74-75 tels que chaque disque est muni d'un orifice Fig11.77 à des positions opposées entre les deux disques. Les disques sont reliés par un axe permettant audit disque de tourner de manière solidaire Fig11.77. Un tube, ou chambre, de transit Fig11.78 relie les deux disques l'un à l'autre tel que en tournant l'ouverture de chacun des deux disques passe alternativement devant respectivement l'entrée et la sortie du tube de transit. L'entrée et la sortie du tube de transit sont jointives Fig11.79 avec respectivement la face inférieure du disque supérieur et la face supérieure du disque inférieur, de manière à assurer une étanchéité entre les disques et l'entrée et la sortie du tube de transit. Chacun des disques est contenu dans une chambre circulaire Fig11.80 comportant sur leurs faces supérieure et inférieure des joints formant une courbe fermée Fig11.81 de manière à définir au moins quatre secteurs. Les secteurs étant préférentiellement superposés entre les deux chambres. En tournant dans le sens trigonométrique quand le disque tourne dans ce sens, les deux chambres sont munies dans le premier secteur d'un orifice aligné sur le tube de transit, de manière à ce que les substrats puissent passer dans la chambre de transit ou sortir de la chambre de transit. Le tube de transit est éventuellement muni de vannes électriques par exemple au nombre de trois, permettant de relier le tube de transit à deux pompes ou deux réservoirs à vide et à un réservoir de gaz sous pression tel que CO2, CO ou éventuellement argon dans le cadre de la réduction d'alumine. Des connecteurs et des fins de course permettent de commander l'ouverture et la fermeture des vannes. Dans un fonctionnement normal les ouvertures des disques sont par exemple orientées à 180°.

Le mouvement est décomposé en 4 étapes.

Étape 1 Fig11.82 : l'ouverture du disque supérieur est alignée à l'entrée du tube de transit, la sortie de ce tube étant fermée par le disque inférieur. Le substrat peut se déverser dans le tube de transit.

Étape 2 Fig11.83 : les deux disques tournent de π/2 de manière à fermer l'entrée du tube de transit, la sortie du tube de transit étant fermée, la vanne pilotant le premier réservoir de vide permet l'évacuation des gaz du tube de transit vers une première enceinte.

Étape 3 Fig11.84 : les deux disques tournent de π/2 de nouveau de manière à ouvrir la sortie, l'entrée étant fermée, le granulat se déverse hors du tube de transit, le vidage est éventuellement accéléré par un jet de gaz, une vanne de gaz s'ouvrant à ce moment.

Étape 4 Fig11.85 : les deux disques tournent de π/2 de manière à fermer la sortie du tube de transit, l'entrée du tube de transit étant fermée, la vanne pilotant le vide du deuxième réservoir de vide permet l'évacuation des gaz du tube de transit vers une deuxième enceinte.

Dans certains modes de réalisation, un conduit ou une ouverture dans le deuxième secteur de chambre supérieure et inférieure des disques, permet d'évacuer le substrat qui arriverait dans ce secteur.

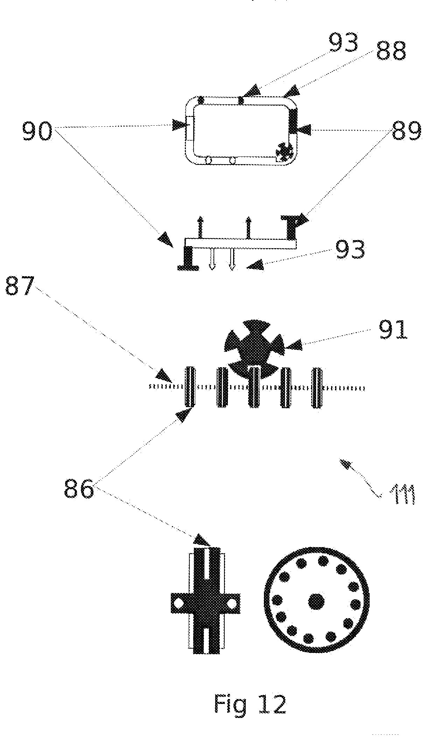

2.1.2 Dans certains modes de réalisation le chargeur et/ou déchargeur comprend un système de palets successifs Fig12.86 relié entre eux par un câble ou par une chaîne Fig12.87 tel que les palets sont ajustés au diamètre interne d'un tube formant un circuit Fig12.88. Le tube formant le circuit comprend une entrée Fig12.89, par laquelle le substrat peut entrer et une sortie Fig12.90 permettant de déverser le substrat dans le réacteur. Les palets sont disposés sur une chaîne ou un câble de manière à former une boucle dans le circuit. Le substrat en se déversant à l'entrée est emprisonné entre deux palets qui le conduisent jusqu'à la sortie du circuit. Des vannes en amont Fig12.92 et en aval Fig12.93 de la sortie relient à deux pompes ou deux enceintes à vide distinct permettent d'évacuer l'atmosphère extérieure ou l'atmosphère du réacteur de manière à empêcher l'air de pénétrer dans le réacteur pour les gaz du réacteur à sortir dans l'atmosphère extérieure. Une vanne reliée à un gaz comprimé CO2, CO, argon, permet de faciliter le transfert du substrat dans le réacteur. Un moteur relié à une roue dentée Fig12.91 permet de faire circuler les palets dans le circuit au travers du réacteur. Les palets pourront être en métal, mais préférentiellement en céramique ou en un empilement métal céramique.

2.2. Dans un mode de réalisation particulier, le dispositif de sortie des substrats en sortie du déchargeur comprendra un système de cyclones. Dans une configuration particulière, le système de cyclones sera constitué d'un cyclone décharge 30 à double entrée longitudinale 31 pour les substrats et tangentielle 32 pour les gaz. L'entrée longitudinale du cyclone comprendra des pales inclinées 33 de manière à laisser passer les substrats liquides et solides, en les orientant dans le sens de rotation du vortex qui sera induit par le cône du cyclone. Un tuyau 34 récupère les gaz remontant de la colonne centrale de gaz formés dans le cyclone et les conduit au travers du réservoir vers d'autres unités. Un piquage 35 situé en fin du tuyau réacteur récupère les gaz circulant dans le réacteur et les conduit à l'entrée tangentielle 32 du cyclone. Sous l'action de ces gaz, un vortex descendant se formera dans le cyclone, entraînant les substrats vers la sortie inférieure du cyclone alors que les gaz remonteront dans une colonne centrale vers le tuyau de récupération.

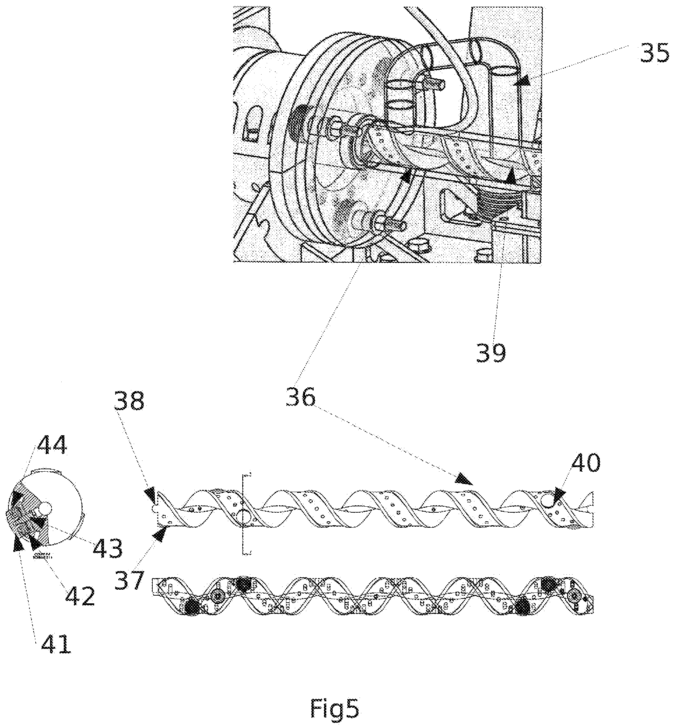

2.3 Au centre du tuyau du F_smo 110 est disposée une vis sans fin Fig5.36 permettant l'avancée des substrats à traiter le long de la lumière du tuyau. Dans un mode de réalisation préférentiel, tout ou partie de la vis sans fin comprendra des écouvillons Fig5.37 ou des brosses dont les poils seront en céramique, silicone vulcanisé, métal ou tout autre matériau résistant à la chaleur. Dans certains modes de réalisation, les poils de l'écouvillon seront en alliage de nickel et seront suffisamment longs pour racler la paroi interne du tuyau du F_smo. Ceci permet d'une part de prévenir la formation de calamine et d'autre part, la circulation libre des gaz dans le tuyau et l'avancée du substrat grâce à la rotation de la vis sans fin. Dans certains modes de réalisation la vis sans fin comprendra plusieurs morceaux reliés entre eux par une queue d'aronde 38. Dans un mode de réalisation encore plus préférentiel la vis sans fin sera enfilée sur un axe central.

2.4 Dans un mode de réalisation encore plus préférentiel, pour permettre une rotation d'une vis sans fin ou hélice de grande taille à l'intérieur du réacteur, la vis sans fin comprendra des patins de glissement et d'amortissement 40 . Les patins comprendront un patin de glissement de préférence en céramique 41 mais qui peut être en métal ou tout autre matériau assurant un glissement, un ressort et éventuellement un axe de guidage pour le ressort 43. Ces patins servant à la fois au glissement grâce à la céramique et à la suspension, grâce au ressort, permettent ainsi à la vis de tourner dans le réacteur avec un minimum de frottement.

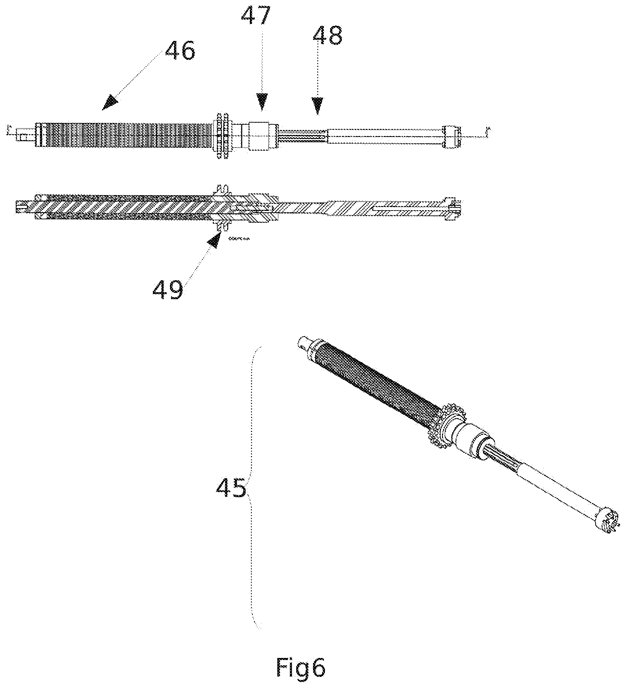

2.5 Dans certains modes de réalisation, la vis sans fin sera tendue dans le réacteur entre une tension variant de 1 kg à 10 tonnes. Les tenseurs Fig6.45-46-47-48-49 disposés à l'extrémité de la vis sans fin comprendront des rondelles Belleville.

2.6 La partie de la vis sans fin disposée en vis-à-vis des magnétrons sera chanfreinée 50 et pourra éventuellement disposer d'un racleur en cuivre.

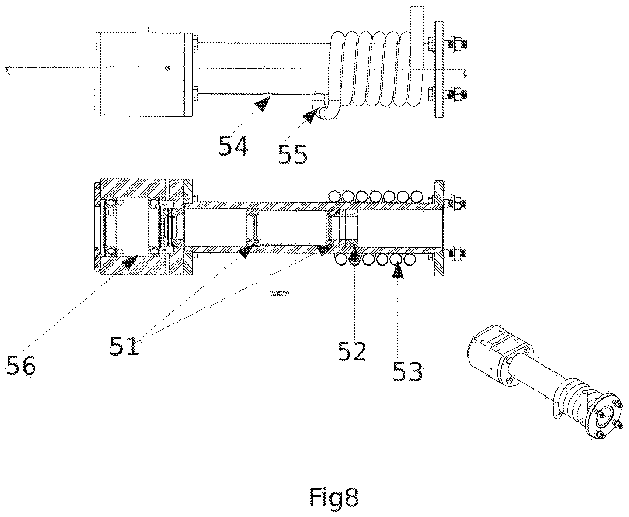

2.7 Dans un mode réalisation particulier, au moins un joint 51 tournant éventuellement tournant sera disposé à au moins une extrémité de la vis. Dans un mode de réalisation particulier, à chaque extrémité de la vis sont disposés de joints Fig8.51-52 séquestrant une huile de refroidissement qui circule dans un échangeur Fig8.53-54-55. L'huile séquestrée permet de refroidir les extrémités de la vis et permet de rendre l'extrémité du réacteur étanche tout en permettant la rotation de la vis dans le réacteur.

2.8 Dans certains modes de réalisation, au moins un palier 56 à au moins une extrémité de la vis guide la rotation de la vis et permet l'appui pour la tension de la vis au travers des rondelles Belleville.

2.9 Dans certains modes de réalisation, la vis sans fin sera en plusieurs parties emboîtées grâce à des queues d'aronde, chaque partie de la vis sans fin étant préférentiellement positionnée le long d'un axe traversant le réacteur cylindrique. Dans ce mode de réalisation, une partie de la vis sera en céramique, notamment la partie de la vis en contact avec le réacteur fig.

Dans certains modes de réalisation, les éléments de la vis sans fin sont maintenus les uns aux autres grâce à des clefs fig.

2.10 Dans certains modes de réalisation, la vis sans fin est remplacée par un système de palets successifs Fig12.86 reliés entre eux par un câble ou par une chaîne Fig12.87. Les palets seront ajustés au diamètre interne du réacteur tel que le substrat emprisonné entre deux palets puisse être poussé au travers du réacteur afin de le traverser. Préférentiellement, les palets sont disposés sur une chaîne ou un câble de manière à former une boucle et seront préférentiellement inclus dans une enceinte fermée. Les palets pourront être en métal, mais présentement en céramique ou en un empilement métal céramique. Aux extrémités du réacteur seront préférentiellement disposés des tubes en téflon ou en viton, caoutchouc vulcanisé, silicone ou tout autre matériau polymère à même d'assurer une étanchéité entre les palets et le tube du réacteur. Les tubes disposés en bout de réacteur permettent de réaliser un circuit pour les palets reliés par un câble ou une chaîne circulaire afin de réaliser un convoyeur 111. Au moins un moteur et au moins une roue dentée permet de faire circuler le convoyeur.

Dans certains modes de réalisation, la vis sans fin ou le câble des palets seront parcourus par un courant électrique de manière à échauffer l'hélice ou le câble et les palets par un effet Joule. Le dispositif utilisé pour le transit des substrats pourra alors participer à l'échauffement et la cuisson/pyrolyse des substrats.

3. Dans certains modes de réalisation, le tuyau du réacteur F_smo (110) sera inclus dans une enceinte Fig1.17-18 de confinement transparente sous vide à double parois. L'espace entre la paroi la plus proche du réacteur et le réacteur sera maintenu sous vide alors que dans l'espace entre les deux parois circule un gaz de confinement tel que un gaz à effet de serre comme le CO2 ou le méthane ou le monoxyde de carbone CO permettant de récupérer la chaleur. La circulation du gaz entre les différentes sections du réacteur sera permise par les pores inclus dans les brides Fig1.16, alors que le vide pourra être réalisé grâce aux conduits réalisés dans les brides Fig 1.17.

4. A l'extérieur du tuyau et du confinement en verre, dans la longueur est disposé un ou plusieurs miroirs ou concentrateurs solaires cylindroparaboliques Fig1.3 et/ou cylindrocirculaires Fig1.57, par exemple en aluminium ou verre métallisé ou tout autre matériau réfléchissant permettant de faire converger la lumière du soleil à la surface du tuyau du réacteur et de faire converger la lumière réfléchie par les tubes de confinement ou du réacteur de nouveau sur le réacteur. Les tuyaux du réacteur seront de préférence de couleur noire mate permettant un maximum d'absorption de la lumière et de la chaleur du rayonnement solaire. Dans un mode de réalisation particulier, le tuyau du réacteur sera constitué ou comprendra du carbure de silicium. Dans d'autres modes de réalisation, le tuyau du réacteur comprendra des particules de nanodiamants ou sera constitué de nanodiamants agglomérés ou liés par un liant de carbure de silicium ou d'une autre céramique ou encore métallique tel que le cuivre. A l'aplomb de la zone d'ombre au-dessus du tuyau à vis sans fin est disposé une plaque métallique Fig1.58 de préférence en cuivre ou en aluminium recouverte par un pavé de verre ou de tout autre matériau transparent tel que un vide soit créé entre le pavé de verre et la plaque de métal Au moins un tube de métal Fig1.59 est disposé sous la plaque de métal, tel que le tuyau de métal soit thermiquement relié à la plaque métallique, de manière que le gaz circulant dans le tuyau de métal récupère la chaleur du rayonnement solaire capté par ladite plaque. Le gaz circulant dans le tuyau situé sous la plaque de métal et le gaz circulant entre les deux tubes de confinement en verre sont réinjectés dans le réacteur.

5. En tête du réacteur sont disposés des magnétrons Fig1.60 qui injectent des micro-ondes de fréquence comprise entre 1 GigaHertz et 300 GigaHertz dans les tubes du réacteur. Le nombre de sources de micro-ondes, comprises entre une et plusieurs dizaines, dépendra de la puissance souhaitée et de la consommation électrique envisagée pour l'installation. Les micro-ondes peuvent être remplacées par tout type d'onde pouvant échauffer les molécules d'eau ou les molécules disposant d'un moment dipolaire, constant ou induit par exemple par un rayonnement infrarouge.

Dans un mode de réalisation préférentiel, la source de micro-ondes est un magnétron F qui aura pour guide d'ondes du magnétron confluant avec les guide de gaz formant un guide mixte . Le guide de gaz permet d'injecter dans le réacteur le gaz provenant d'une part, de l'espace entre les deux tubes en verre de confinement et d'autre part, du ou des tubes situés sous la plaque métallique en aplomb du réacteur. L'angle d'implantation des guides d'onde, et du guide de gaz dans le guide mixte, ainsi que le flux de gaz provenant du guide de gaz empêchera l'entrée dans le guide d'ondes du substrat et des gaz circulant dans la lumière du F_smo . Dans un mode de réalisation particulier, un hublot en quartz ou en alumine ou en une autre céramique transparente aux micro-ondes est disposé dans le guide d'onde avant l'entrée de gaz. Dans certains modes de réalisation, le hublot peut être remplacé ou complété à un tube en céramique transparent aux micro-ondes tel que en oxyde de zirconium dopé à la magnésie introduit dans le réacteur.

6. Les conduits et/ou l'axe de l'hélice ou toute autre partie du réacteur seront éventuellement reliés à des sources d'ultrasons afin d'éviter la formation de calamine à ce niveau. Les micro-ondes entraînent l'échauffement très rapide des molécules du substrat, par l'agitation des molécules d'eau et autres molécules polaires contenues dans le substrat. Les micro-ondes pourront éventuellement être complétées par un rayonnement infra rouge. La chaleur produite par les micro-ondes additionnée à la chaleur de convergence du rayonnement solaire et celle accumulé dans le gaz circulant, entraîne la torréfaction et la pyrolyse du substrat. Lors de cette pyrolyse, il se produit un dégagement de matières volatiles contenant du goudron, ainsi que divers autres gaz inflammables. Ces différents gaz sont récupérés par le piquage des cheminées de dégazage 35 pour être injectés dans un réacteur de gazéification après séparation des gaz et des chars dans le cyclone de sortie. Avant leur injection dans le gazéificateur, ces gaz peuvent être surchauffés (entre 160 et 2000 °C) par apport de micro-ondes et de chaleur d'origine solaire.

7. Dans certains modes de réalisation, le substrat comprend les éléments nécessaires pour la réalisation d'un bain d'électrolyse permettant de produire de l'aluminium par électrolyse, par exemple un mélange formé d'une combinaison quelconque de NaF, KF, AIF3, AlCl3, Na3AIF6, NaCl, C, dans des proportions variant par exemple de 0 à 50 % massique complété par de l'alumine Al2O3. Le mélange durant son transit dans le réacteur sera porté à des températures supérieures à 950 °C par l'action des micro-ondes et/ou du rayonnement solaire, de manière à obtenir un sel fondu hétérogène ou un sel partiellement fondu hétérogène formant un milieu ou un bain d'électrolyse pour la réduction de l'alumine en aluminium.

Le sel fondu mixte ou semi fondu pourra subir une électrolyse classique telle que celle décrite pour la réduction de l'alumine.

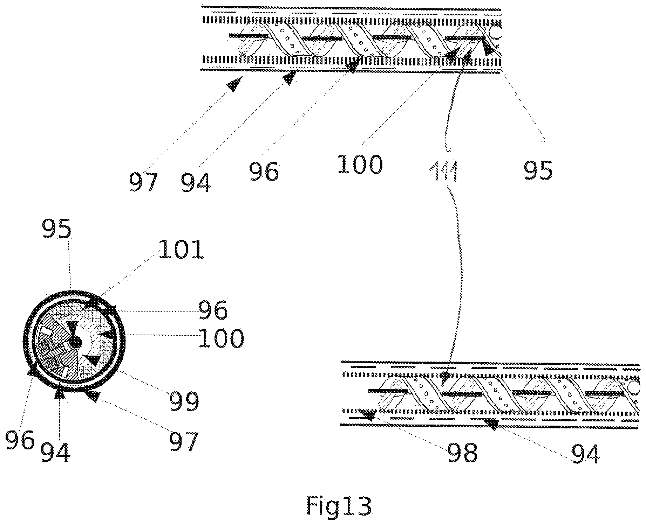

Dans un mode de réalisation particulier, l'électrolyse sera réalisée directement dans une partie du four. Dans ce mode de réalisation particulier, la partie du four destinée à la réduction de l'alumine comprendra une électrode périphérique FIG13.94 au niveau de la paroi du réacteur Fig13.97, préférentiellement cylindrique, mise à un potentiel négatif par exemple à un potentiel compris entre 1 V et 10 KV (électrode négative ou cathode) par rapport à l'axe de la vis sans fin Fig13.95 ou du câble ou de la chaîne reliant les palets permettant de transporter le substrat dans le réacteur. Le câble ou chaîne des palets ou l'axe de l'hélice formeront alors une électrode positive centrale. L'électrode négative périphérique formant préférentiellement un tube métallique ou une portion de tube métallique doublant la paroi du réacteur. Dans un mode encore plus préférentiel, les électrodes seront en tantale, platine, alliage de tantale, alliage tantale/platine, tantale/platine/fer tel que des alliages de type 310 enrichis en tantale et ou en platine. Dans certains modes de réalisation, l'électrode négative se dispose sous un cylindre de carbone Fig13.96 tel que le carbone forme une électrode d'usure.

Dans certains modes de réalisation, entre l'électrode négative et la vis sans fin ou les palets du convoyeur 111 est introduit un cylindre en céramique poreuse Fig13.98 tel qu'il existe préférentiellement un espace entre l'électrode négative cylindrique 94 et le cylindre en céramique poreux 98. Le cylindre en céramique poreux comportera au moins une partie poreuse préférentiellement disposée vers la face basse du cylindre par rapport du réacteur. De la poudre carbone sera injectée dans l'espace situé entre l'électrode négative et le tube de céramique poreux, la poudre sera injectée par exemple grâce à un gaz argon de manière à ce que la poudre de carbone remonte éventuellement au coeur du réacteur au travers des pores du cylindre de céramique poreuse.

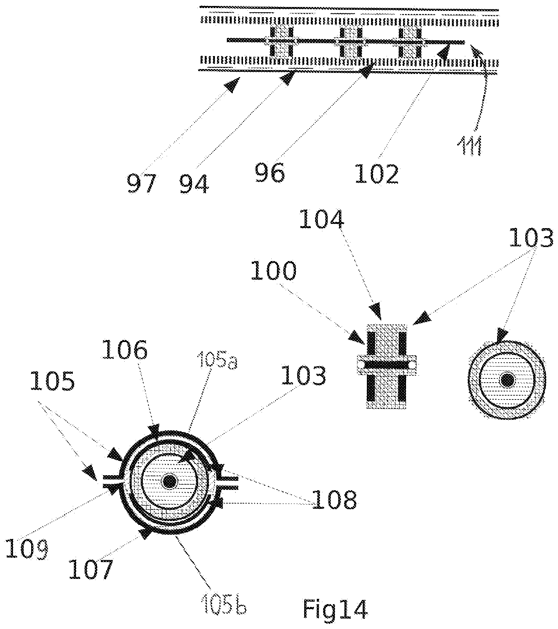

Dans d'autres modes réalisation, l'axe de la vis sans fin 95 du réacteur ou la chaîne ou le câble Fig14.102 du convoyeur Fig14.111 à palets 103 sera une électrode positive anode en tantale, platine, alliage de tantale, alliage tantale/platine, tantale/platine/fer tel que des alliages de type 310 enrichis en tantale et/ou en platine. Les bords de la vis sans fin 99 et la structure extérieure des palets préférentiellement en céramique comporteront des inserts en carbone 100 faisant office d'électrode d'usure. Les parties métalliques du convoyeur 111 seront préférentiellement recouvertes de céramique 101 électriquement isolante éventuellement souple de manière à ce que les inserts de carbone forment l'anode, conducteurs électrique en contact avec le bain d'électrolyse.

Le substrat qui circule dans la partie électrolytique du réacteur est soumis à un champ électrique préférentiellement compris entre 5V et 200 kV et est parcouru par un courant électrique d'une intensité de préférence comprise entre 100 et 100 000 A , qui circule entre l'électrode positive et l'électrode négative, de manière à avoir une densité de courant supérieur à 0,1 A/cm2.

Sous l'action du courant les électrolytes dans les sels fondus ou semi fondus réagissent tel que à l'anode la réaction suivante se produit

4F- + Al2O2F4 2- + C → 4e- + 2 AIF4- + CO2

4F- + Al2O2F4 2- + 2C → 4e- + 2 AIF4- + 2CO

alors qu'à la cathode, la réaction suivante se produit :

AlF4- +3e- -> Al (liquide) + 4 F-

Dans d'autres modes de réalisation, la partie du réacteur cylindrique de réduction de l'alumine est en deux parties 105a,105b qui, ajustées, forment un cylindre de préférence en céramique Fid14.105. Au moins une électrode anode 106 est positionnée sur la partie supérieure 105a du réacteur formant un demi-cylindre. Une autre électrode cathode 107 est disposée sur la partie inférieure 105b du réacteur. Deux électrodes d'usure en carbone 108 formant des portions de cylindre, sont disposées sur les électrodes métalliques anode et cathode. Deux bandes de céramique formant des secteurs de cylindre 109, séparent les électrodes afin de les isoler électriquement l'une de l'autre. Le convoyeur isolé des électrodes supérieure et inférieure, transporte le substrat entre les deux électrodes, permettant ainsi la réduction de l'alumine.

En sortie de réacteur l'aluminium réduit plus dense sera récupéré à la sortie basse d'un cyclone alors que le liquide d'électrolyse moins dense et éventuellement les gaz d'injection du carbone, pourront être récupérés par le tube remontant du cyclone.

8. Dans certains modes de réalisation, le four solaire /micro-ondes éventuellement complété par l'effet Joule d'un courant électrique passant au travers du convoyeur, sera utilisé pour recycler de l'aluminium à partir de déchets d'aluminium, grâce à la fusion desdits déchets traversant le réacteur solaire

### LEGENDES DE L'ENSEMBLE DES FIGURES

1) système de levage actionné par des moteurs
2) système articulé et vérins pour déplier et de reployer les miroirs
3) miroir concentrateurs solaires cylindroparaboliques
4) tuyau du réacteur four solaire/micro-ondes (F_smo)
5) embouts emboîtés ou vissés d'un tuyau de réacteur
6) structure ondulée (Fig2.6) reliant les embouts de deux tuyaux consécutifs
7) bride en plusieurs parties Fig2.7 comportant des éléments de suspension
8) partie intérieure bride 7
9) partie extérieure bride 7
10) élément de suspensions ressort
11) élément de suspensions piston
12) coquille métallique
13) joint de suspension et d'isolation thermique
14) palier intermédiaire
15) patin en bronze
16) passage pour gaz
17) tube verre intérieur confinement
18) tube verre extérieur confinement
19) passage pour vide
20) chargeur ou déchargeur de substrat
21) chargeur cylindre intérieur muni d'une cavité
22) pores disposés à l'opposé de l'ouverture de la cavité 23.
23) ouverture cavité
24) Chargeur cylindre extérieur
25) ouverture cylindre extérieur
26) chambre cylindrique
27) pores opposées et disposées latéralement en position équatoriale
28) plateaux à en grenage
29) joint métallique en S
30) déchargeur à double entrée
31) entrée longitudinale pour les substrats
32) entrée tangentielle pour les gaz
33) pales inclinées, entrée longitudinale
34) tuyau de récupération des gaz remontant
35) piquage situé en fin du tuyau réacteur
36) vis ou hélice dans son réacteur
37) implantation brosse
38) queue d'aronde
39) axe vis sans fin
40) patin de glissement et d'amortissement
41) patin de glissement de préférence en céramique
42) ressort de patin
43) axe
44) semelle
45) tenseur
46) rondelle Belleville
47) appui de tenseur
48) cannelure d'entraînement compensant la dilatation
49) engrenage d'entraînement de vis
50) partie vis sans fin disposée en vis-à-vis des magnétrons chanfreinée
51) joint d'étanchéité en fin de vis
52) joint métallique et céramique d'étanchéité et bouclier thermique
53) échangeur thermique
54) entrée huile
55) sortie huile vers échangeur thermique
56) palier
57) miroir cylindrocirculaires
58) plaque métallique (cuivre ou aluminium) recouverte par un pavé tel qu'il y ait une cavité sous vide entre le pavé de verre et la plaque de métal
59) structure de supportage du réacteur incluant les tubes métalliques de circulation de gaz
(60) magnéton
61) roulement
62) axe de rotation
63) motorisation vis
64) motorisation
65) roues orientables
66) vérins
67) accumulateurs hydrauliques
68) Vanne
69) Vanne anti retour
70) Piston étanche
71) gaz de pression
72) circuit hydraulique
73) bouchon
74) disques superposés supérieur
75) disques superposés inférieur
76) orifice de disque à des positions opposées entre les deux disques 74-75
77) axe reliant les disques supérieur et inférieur
78) tube de transit
79) joint de tube de transit sont jointives
80) chambre circulaire
81) joints formant une courbe fermée de manière à définir quatre secteurs dans la chambre circulaire.
82) disque supérieur ouvert aligné à l'entrée du tube de transit, la sortie de ce tube étant fermée.
83) entrée et sortie fermées du tube de transit.
84) sortie ouverte du tube de transit, l'entrée étant fermée.
85) tube de transit fermé
86) palet de convoyeur
87) chaîne ou câble de convoyeur
88) circuit de convoyeur
89) entrée
90) sortie
91) roue dentée
92) vanne en amont
93) vanne aval
94) électrode périphérique et négative ou cathode
95) électrode positive centrale anode
96) électrode d'usure cathode
97) paroi du réacteur
98) cylindre en céramique poreuse
99) vis sans fin recouvertes de céramique
100) insert en carbone faisant office d'électrode d'usure.
101) bord de la vis sans fin recouvert de céramique électriquement isolant
102) câble du convoyeur à palets
103) palet
104) Bord de palet recouvert de céramique électriquement isolant
105) réacteur en deux parties, respectivement supérieure 105a et inférieure 105b qui, ajustées, formant un cylindre en céramique
106) anode positionnée sur la partie supérieure du réacteur
107) cathode disposée sur la partie inférieure du réacteur
108) électrodes d'usure en carbone
109) bandes de céramique formant un secteur de cylindre
110) réacteur ; four solaire/micro-ondes (F_smo)
111) convoyeur
112) chariot

## Revendications

1. Procédé thermo-solaire micro-ondes mis en oeuvre dans un réacteur tubulaire (110 ; F_smo) comprenant :
- un convoyeur (111) de substrats définis comme des matières ainsi convoyées, et,
- l'application audit réacteur d'une énergie solaire et d'une énergie micro-ondes,
**caractérisé en ce que** :
- il comprend une étape de circulation d'un courant électrique dans le convoyeur, pour produire de la chaleur par effet Joule dans le convoyeur (111) de substrats, et,
- il comprend en outre une fusion des substrats, lesquels comprennent les éléments nécessaires à l'obtention d'un milieu d'électrolyse pour la réduction, en aluminium, d'alumine contenue dans lesdits substrats, est réalisée sous l'action :
-- d'une énergie thermique produite par ladite circulation de courant électrique dans le convoyeur (111) de substrats, et
-- de l'énergie solaire appliquée et/ou de l'énergie micro-ondes appliquée, et/ou
- l'un des substrats contient de l'aluminium qui est mis en fusion dans le réacteur tubulaire (110 ; F_smo) sous l'action :
-- d'une énergie thermique produite par ladite circulation de courant électrique dans le convoyeur (111) de substrats, et
-- de l'énergie solaire appliquée et/ou l'énergie micro-ondes appliquée.

2. Procédé selon la revendication 1, **caractérisé en ce que** la fusion est réalisée sous l'action de l'énergie thermique produite, de l'énergie solaire appliquée et de l'énergie micro-ondes appliquée.

3. Procédé selon la revendication 1 ou 2, **caractérisé en ce qu'**on induit dans les substrats, sous l'action du courant électrique circulant dans le convoyeur, certaines au moins parmi des cuissons, des pyrolyses, des gazéifications, des fusions et des réactions chimiques comprenant des réactions d'oxydo-réductions.

4. Dispositif thermo-solaire micro-ondes pour la mise en oeuvre du procédé selon l'une des revendications 1 à 3, comprenant un réacteur tubulaire (110 ; F_smo) qui comprend un convoyeur (111) de substrats définis comme des matières ainsi convoyées, **caractérisé en ce qu'**il comprend en outre des moyens d'application d'une énergie solaire et d'une énergie micro-ondes et des moyens (87,94,95,96,102) de circulation de courant électrique, pour faire circuler un courant électrique dans le convoyeur (111) de substrats, afin d'y produire de la chaleur par effet Joule et de pouvoir induire :
- une fusion des substrats, lesquels comprennent les éléments nécessaires à l'obtention d'un milieu d'électrolyse pour la réduction, en aluminium, d'alumine contenue dans lesdits substrats, sous l'action de l'énergie solaire et/ou de l'énergie micro-ondes, et d'une énergie thermique produite par ladite circulation de courant électrique dans le convoyeur (111) de substrats, et/ou
- une mise en fusion, dans le réacteur tubulaire (110 ; F_smo), d'aluminium contenu dans l'un des substrats, sous l'action de l'énergie solaire et/ou de l'énergie micro-ondes et d'une énergie thermique produite par ladite circulation de courant électrique dans le convoyeur (111) de substrats.

5. Dispositif selon la revendication 4, **caractérisé en ce qu'**il comprend des moyens (87,94,95,96,102) pour induire certaines au moins parmi des cuissons, des pyrolyses, des gazéifications, d'autres fusions et des réactions chimiques comprenant des réactions d'oxydo-réductions, sous l'action du courant électrique.

6. Dispositif selon la revendication 4 ou 5, **caractérisé en ce que** le convoyeur (111) de substrats comprend une vis sans fin hélicoïdale (36,99) qui comprend :
- des éléments emboîtés entre eux par des queues d'aronde ou des clefs, lesdits éléments emboîtés étant disposés le long d'un axe du dispositif, et
- des éléments de suspension permettant un soutien et une rotation de la vis (40,41,42).

7. Dispositif selon l'une quelconque des revendications 4 à 6, **caractérisé en ce que** le convoyeur (111) de substrats comprend un système de palets (86,103) successifs reliés entre eux par un câble ou une chaîne (87,102), lesdits palets étant ajustés au diamètre interne du réacteur tubulaire (110 ; F_smo) de manière que les substrats soient emprisonnés entre deux palets successifs et soient poussés au travers du réacteur pour le traverser.

8. Dispositif selon l'une quelconque des revendications 4 à 7, **caractérisé en ce qu'**une entrée et éventuellement une sortie des substrats du réacteur (110 ; F_smo) est assurée par un système comprenant au moins deux cylindres (20-29) emboîtés entre eux et tournant en sens inverse, pour transférer les substrats de l'amont du système vers l'aval du système, sans mélange d'atmosphères entre l'amont et l'aval.

9. Dispositif selon l'une quelconque des revendications 4 à 8, **caractérisé en ce qu'**une entrée et éventuellement une sortie des substrats du réacteur (110 ; F_smo) est assurée par un système comprenant deux disques (74,75,82-85) superposés, respectivement un disque supérieur et un disque inférieur, possédant chacun une ouverture (76), lesdites ouvertures étant disposées à des positions différentes sur les disques de manière à passer alternativement devant une chambre de transit (78) afin d'isoler alternativement ladite chambre de transit (78) d'un espace en amont du disque supérieur et d'un espace en aval du disque inférieur, pour que les substrats puissent traverser la chambre de transit (78) sans mélange d'atmosphères entre l'amont et l'aval.

10. Dispositif selon l'une quelconque des revendications 4 à 9, **caractérisé en ce que** le réacteur (110) est repliable dans un container.

11. Dispositif selon l'une quelconque des revendications 4 à 10, **caractérisé en ce que** le réacteur (110) est disposé sur un chariot (112) comportant des roues (65) éventuellement orientables comportant éventuellement des vérins (66) permettant une planéité du chariot et les roues éventuellement motorisées pour un traquage solaire par rotation du chariot.

12. Dispositif selon l'une quelconque des revendications 4 à 11, **caractérisé en ce que**, pour une réaction d'oxydo-réduction comprenant la réduction d'alumine en aluminium, le réacteur (110 ; F_smo), qui est à paroi tubulaire (97), comprend :
- une électrode positive centrale (95) formant une anode disposée au centre du réacteur, et
- une électrode périphérique (94) située au niveau de ladite paroi tubulaire du réacteur et mise à un potentiel négatif, formant une cathode, ladite électrode périphérique étant de préférence recouverte de carbone ou en contact avec des particules de carbone éventuellement injectées dans le réacteur,
de telle sorte que ledit convoyeur comporte des inserts de carbone formant une électrode d'usure (96,110).

13. Dispositif selon l'une quelconque des revendications 4 à 11, **caractérisé en ce que**, pour une réaction d'oxydo-réduction comprenant la réduction d'alumine en aluminium, le réacteur tubulaire (110 ; F_smo) comprend une partie supérieure (105a) et une partie inférieure (105b), la partie supérieure du réacteur comprenant une électrode supérieure anode (106), et la partie inférieure du réacteur comprenant une électrode inférieure cathode (107), les électrodes supérieure anode et inférieure cathode étant séparées par des éléments électriquement isolants (109).

14. Dispositif selon la revendication 13, **caractérisé en ce que** les électrodes supérieure anode et inférieure cathode sont recouvertes de carbone pour former des électrodes d'usure (108,96,100).

15. Dispositif selon l'une quelconque des revendications 12 à 14, **caractérisé en ce que** certaines au moins des électrodes sont dans l'un au moins des matériaux suivants : tantale, alliage de tantale, platine, alliage de platine, alliage de fer contenant du platine ou du tantale, acier contenant du platine ou du tantale.

## Patentansprüche

1. Solarthermisches Mikrowellen-Verfahren, das in einem Rohrreaktor (110; F_smo) durchgeführt wird, umfassend:
- eine Fördereinrichtung (111) für Substrate, die als Fördergut definiert sind, und
- die Zufuhr von Solarenergie und Mikrowellenenergie zu dem Reaktor, **dadurch gekennzeichnet, dass**
- es einen Schritt des Fließens von elektrischem Strom in der Fördereinrichtung umfasst, um in der Substratfördereinrichtung (111) Wärme durch Joule-Effekt zu erzeugen, und
- es ferner ein Schmelzen der Substrate umfasst, die Elemente enthalten, die für die Gewinnung eines Elektrolysemediums für die Reduktion von in diesen Substraten enthaltenem Aluminiumoxid zu Aluminium erforderlich sind, unter der Einwirkung von:
-- Wärmeenergie, die durch den elektrischen Stromfluss in der Substratfördereinrichtung (11) erzeugt wird, und
-- zugeführter Solarenergie und/oder zugeführter Mikrowellenenergie, und/oder
- eines der Substrate Aluminium enthält, das in dem Rohrreaktor (110; F-smo) zum Schmelzen gebracht wird unter der Einwirkung von:
-- Wärmeenergie, die durch den elektrischen Stromfluss in der Substratfördereinrichtung (11) erzeugt wird, und
-- zugeführter Solarenergie und/oder zugeführter Mikrowellenenergie.

2. Verfahren nach Anspruch 1,
**dadurch gekennzeichnet, dass** das Schmelzen unter der Einwirkung von erzeugter Wärmeenergie, zugeführter Solarenergie und zugeführter Mikrowellenenergie erfolgt.

3. Verfahren nach Anspruch 1 oder 2,
**dadurch gekennzeichnet, dass** unter der Einwirkung von in der Fördereinrichtung fließendem elektrischen Strom zumindest einige der folgenden Prozesse in den Substraten hervorgerufen werden: Brennen, Pyrolyse, Vergasung, Schmelzen und chemische Reaktionen, die Oxidations-Reduktions-Reaktionen umfassen.

4. Solarthermische Mikrowellen-Vorrichtung zum Durchführen des Verfahrens nach einem der Ansprüche 1 bis 3, enthaltend einen Rohrreaktor (110; F_smo) mit einer Fördereinrichtung (111) für Substrate, die als Fördergut definiert sind,
**dadurch gekennzeichnet, dass** sie ferner Mittel zum Zuführen von Solarenergie und Mikrowellenenergie und Mittel (87, 94, 95, 96, 102) zum Fließen von elektrischem Strom enthält, um einen elektrischen Strom in der Substratfördereinrichtung (111) fließen zu lassen, um darin Wärme durch Joule-Effekt zu erzeugen und um hervorzurufen:
- Schmelzen der Substrate, die Elemente umfassen, die für die Gewinnung eines Elektrolysemediums für die Reduktion von in diesen Substraten enthaltenem Aluminiumoxid zu Aluminium erforderlich sind, unter der Einwirkung von Solarenergie und/oder Mikrowellenenergie und von Wärmeenergie, die durch den elektrischen Stromfluss in der Substratfördereinrichtung (111) erzeugt wird, und/oder
- Aufschmelzen von in einem der Substrate enthaltenem Aluminium im Rohrreaktor (110; F-smo) unter der Einwirkung von Solarenergie und/oder Mikrowellenenergie und von Wärmeenergie, die durch den elektrischen Stromfluss in der Substratfördereinrichtung (111) erzeugt wird.

5. Vorrichtung nach Anspruch 4,
**dadurch gekennzeichnet, dass** sie Mittel (87, 94, 95, 96, 102) umfasst, um zumindest einige der folgenden Prozesse hervorzurufen: Brennen, Pyrolyse, Vergasung, weitere Schmelzvorgänge und chemische Reaktionen, die Oxidations-Reduktions-Reaktionen umfassen, unter der Einwirkung von elektrischem Strom.

6. Vorrichtung nach Anspruch 4 oder 5,
**dadurch gekennzeichnet, dass** die Substratförderereinrichtung (111) eine schraubenförmige Schnecke (36, 99) umfasst, enthaltend:
- Elemente, die mittels Schwalbenschwanz- oder Schlüsselverbindungen ineinandergreifen,
wobei die ineinandergreifenden Elemente entlang einer Achse der Vorrichtung angeordnet sind, sowie
- Aufhängungselemente, die ein Abstützen und Drehen der Schnecke (40, 41, 42) ermöglichen.

7. Vorrichtung nach einem der Ansprüche 4 bis 6,
**dadurch gekennzeichnet, dass** die Substratfördereinrichtung (111) ein System von aufeinanderfolgenden Haltern (86, 103) umfasst, die durch ein Seil oder eine Kette (87, 102) miteinander verbunden sind, wobei die Halter an den Innendurchmesser des Rohrreaktors (110; F_smo) so angepasst sind, dass die Substrate zwischen zwei aufeinanderfolgenden Haltern eingeschlossen und durch den Reaktor geschoben werden, um ihn zu durchqueren.

8. Vorrichtung nach einem der Ansprüche 4 bis 7,
**dadurch gekennzeichnet, dass** ein Einlass und gegebenenfalls ein Auslass des Reaktors (110; F_smo) für die Substrate durch ein System gewährleistet wird, das zumindest zwei Zylinder (20-29) umfasst, die ineinandergreifen und sich in entgegengesetzter Richtung drehen, um die Substrate von der stromaufwärtigen Seite des Systems zur stromabwärtigen Seite des Systems ohne Vermischung der Atmosphären zwischen stromaufwärts und stromabwärts zu überführen.

9. Vorrichtung nach einem der Ansprüche 4 bis 8,
**dadurch gekennzeichnet, dass** ein Einlass und gegebenenfalls ein Auslass des Reaktors (110 ; F_smo) für die Substrate durch ein System gewährleistet wird, das zwei übereinander angeordnete Scheiben (74, 75, 82-85), nämlich eine obere Scheibe und eine untere Scheibe, umfasst, die jeweils eine Öffnung (76) besitzen, wobei die Öffnungen an unterschiedlichen Positionen auf den Scheiben so angeordnet sind, dass sie abwechselnd an einer Transitkammer (78) vorbeiführen, um die Transit-Kammer (78) abwechselnd von einem Raum stromaufwärts der oberen Scheibe und einem Raum stromabwärts der unteren Scheibe zu separieren, so dass die Substrate die Transit-Kammer (78) ohne Vermischung der Atmosphären zwischen stromaufwärts und stromabwärts durchqueren können.

10. Vorrichtung nach einem der Ansprüche 4 bis 9,
**dadurch gekennzeichnet, dass** der Reaktor (110) in einen Container zusammenlegbar ist.

11. Vorrichtung nach einem der Ansprüche 4 bis 10,
**dadurch gekennzeichnet, dass** der Reaktor (110) auf einem Wagen (112) mit gegebenenfalls lenkbaren Rädern (65) angeordnet ist, die gegebenenfalls Kraftzylinder (66) aufweisen, um für den Wagen eine ebene Stellung zu ermöglichen, wobei die Räder gegebenenfalls motorisiert sind, um durch Drehung des Wagens eine Sonnennachführung zu ermöglichen.

12. Vorrichtung nach einem der Ansprüche 4 bis 11,
**dadurch gekennzeichnet, dass** für eine Oxidations-Reduktions-Reaktion, die die Reduktion von Aluminiumoxid zu Aluminium umfasst, der Reaktor (110; F_smo) mit rohrförmiger Wand (97) umfasst:
- eine positive Mittelelektrode (95), die eine Anode bildet und in der Mitte des Reaktors angeordnet ist, und
- eine umlaufende Elektrode (94), die sich an der rohrförmigen Wand des Reaktors befindet, auf ein negatives Potenzial gesetzt ist und eine Kathode bildet, wobei die umlaufende Elektrode vorzugsweise mit Kohlenstoff bedeckt ist oder in Kontakt mit Kohlenstoffpartikeln steht, die gegebenenfalls in den Reaktor eingespeist werden,
so dass die Fördereinrichtung Kohlenstoffeinschlüsse aufweist, die eine Verschleißelektrode (96, 110) bilden.

13. Vorrichtung nach einem der Ansprüche 4 bis 11,
**dadurch gekennzeichnet, dass** für eine Oxidations-Reduktions-Reaktion, die die Reduktion von Aluminiumoxid zu Aluminium umfasst, der Rohrreaktor (110; F_smo) einen oberen Abschnitt (105a) und einen unteren Abschnitt (105b) umfasst, wobei der obere Abschnitt des Reaktors eine obere Anodenelektrode (106) umfasst und der untere Abschnitt des Reaktors eine untere Kathodenelektrode (107) umfasst, wobei die obere Anodenelektrode und die untere Kathodenelektrode durch elektrisch isolierende Elemente (109) voneinander getrennt sind.

14. Vorrichtung nach Anspruch 13,
**dadurch gekennzeichnet, dass** die obere Anodenelektrode und die untere Kathodenelektrode mit Kohlenstoff beschichtet sind, um Verschleißelektroden (108, 96, 100) zu bilden.

15. Vorrichtung nach einem der Ansprüche 12 bis 14,
**dadurch gekennzeichnet, dass** zumindest einige der Elektroden aus zumindest einem der folgenden Materialien bestehen: Tantal, Tantallegierung, Platin, Platinlegierung, platin- oder tantalhaltige Eisenlegierung, platin- oder tantalhaltiger Stahl.

## Claims

1. A microwave thermosolar method implemented in a tubular reactor (110; F_smo) comprising:
- a conveyor (111) for substrates defined as materials thus conveyed, and,
- the application to the said reactor of one solar energy and one micro-wave energy,
**characterised in that**:
- it comprises a step of circulation of an electric current in the conveyor, in order to produce heat by Joule effect in the substrates conveyor (111) and,
- it further comprises a fusion of the substrates, which comprise the elements necessary for obtaining an electrolysis medium for the reduction, into aluminium, of alumina contained in these substrates, is carried out, under the action :
-- of one thermal energy produced by the circulation of electric current in the substrate conveyor (111), and
-- of the solar energy applied and/or of the microwave energy applied, and/or
- one of the substrates contains aluminium that is fused in the tubular reactor (110; F_smo), under the action :
-- of one thermal energy produced by the circulation of electric current in the substrate conveyor (111), and
-- of the solar energy applied and/or microwave energy applied.

2. Method according to claim 1, **characterized in that** the fusion is realized under the action of the thermal energy produced, of the solar energy applied and of the micro-wave energy applied.

3. Method according to claim 1 or 2, **characterized in that** the substrates is induced, under the action of the electric current circulating in the conveyor, at least some of the curing, pyrolyses, gasifications, fusions and chemical reaction comprising oxidation reduction reactions.

4. A microwave thermosolar device for implementing the method according to one of claims 1 to 3, comprising a tubular reactor (110; F_smo) that comprises a conveyor (111) for substrates defined as materials thus conveyed, **characterized in that** it further comprises means of application of one solar energy and of one micro-wave energy and means (87,94,95,96,102) of electric current circulation, for circulating an electric current in the conveyor of substrates, in order to produce therein heat by Joule effect and to induce:
- a fusion of substrates, which comprise the elements necessary to obtain an electrolysis medium for the reduction, in aluminium, alumina contained in said substrates, under the action of the solar energy and/or microwave energy, and of thermal energy produced by said electric current circulation in the substrate conveyor (111), and/or
- a setting in fusion, in the tubular reactor (110; F_smo), of aluminium contained in one of the substrates, under the action of the solar energy and/or microwave energy and one thermal energy produced by said electric current circulation in the substrate conveyor (111).

5. A device according to claim 4, **characterized in that** it comprises means (87,94,95,96,102) to induce at least some of the curing, pyrolyses, gasifications, fusions and chemical reactions comprising oxidation-reduction reactions, under the action of the electric current.

6. A device according to claim 4 or 5, **characterised in that** the substrates conveyor (111) comprises a helical worm (36, 99) comprising :
- elements fitted together by dovetails or keys, said fitted-together elements being disposed along an axis of the device, and suspension elements for supporting and rotating the worm (40, 41, 42).

7. A device according to any one of the claims 4 to 6, **characterised in that** the substrates conveyor (111) comprises a system of successive palets (86, 103) connected together by a cable or a chain (87, 102), said palets (86,103) being adjusted to the inside diameter of the tubular reactor (110; F_smo) so that the substrates are trapped between two successive palets and are pushed through the reactor in order to traverse it.

8. A device according to any of claims 4 to 7, **characterised in that** an entrance and optionally an exit for the substrates of the reactor (110; F_smo) is provided by a system comprising at least two cylinders (20-29) fitted together and rotating in opposite directions, in order to transfer the substrates from the upstream end of the system to the downstream end of the system, without mixing of atmospheres between upstream and downstream,

9. A device according to any one of claims 4 to 8, **characterised in that** an entrance and optionally an exit for the substrates of the reactor (110; F_smo) is provided by a system comprising two discs (74,75,82-85) placed one above the other, respectively a top disc and a bottom disc, each having an opening (76), said openings being disposed at different positions on the discs so as to pass in alternation in front of a transit chamber (78) so as to alternately isolate said transit chamber (78) from a space upstream of the top disc and a space downstream of the bottom disc, so that the substrates can pass through the transit chamber (78) without mixing of atmospheres between upstream and downstream,

10. A device according to any one of claims 4 to 9, **characterised in that** the reactor (110) can be folded in a container.

11. A device according to any one of claims 4 to 10, **characterised in that** the reactor (110) is disposed on a carriage (112) comprising optionally orientable wheels (65), optionally comprising jacks (66) for making the carriage level and optionally motorised wheels for solar tracking by rotation of the carriage.

12. A device according to any one of claims 4 to 11, **characterised in that**, for an oxidation-reduction reaction comprising the reduction of alumina into aluminium, the reactor (110; F_smo), which has a tubular wall (97), comprises:
- a central positive electrode (95) forming an anode disposed at the center of the reactor, and
- a peripheral electrode (94) situated at said tubular wall of the reactor and put to a negative potential, forming a cathode, said peripheral electrode preferably being covered with carbon or in contact with carbon particles optionally injected into the reactor,
so that said conveyor then comprises carbon inserts forming a consumable electrode (96, 110).

13. A device according to any one of claims 4 to 11, **characterised in that**, for an oxidation-reduction reaction comprising the reduction of alumina into aluminium, the tubular reactor (110; F_smo) comprises a top part (105a) and a bottom part (105b), the top part of the reactor comprising an anode top electrode (106), and the bottom part of the reactor comprising a bottom electrode cathode (107), the upper anode and bottom cathode electrodes being separated by electrically insulating elements (109).

14. A device according to claim 13, **characterised in that** the upper anode and bottom cathode electrodes are covered with carbon in order to form consumable electrodes (108,96,100).

15. A device according to any one of claims 12 to 14, **characterised in that** at least some of these electrodes are made from at least one of the following materials: tantalum, tantalum alloy, platinum or platinum alloy, iron alloy containing platinum or tantalum, steel containing platinum or tantalum.
